# FASCICULE DE BREVET EUROPEEN

(11) **EP 0 925 971 B1**
(45) Date de publication et mention de la délivrance du brevet: **16.06.2004**
(21) Numéro de dépôt: 98123534.4
(22) Date de dépôt: 16.12.1998
(51) Int. Cl.: B60H 1/32, F25B 49/00

(54) **Procédé et dispositif de diagnostic d'une boucle de climatisation de véhicule automobile**
Verfahren und Anordnung zur Fehlerdiagnose eines Klimaanlagekreislaufes eines Kraftmotors
Method and apparatus for diagnosing an air conditioning circuit

(30) Priorité: 17.12.1997 FR 9716021
(43) Date de publication de la demande: 30.06.1999
(73) Titulaire: Valeo Service, 93582 Saint-Ouen (FR)
(72) Inventeur: Cheballah, Amar, 95160 Montmorrency (FR)
(74) Mandataire: Lemaire, Marc

(56) Documents cités:
- US-A- 5 214 918
- US-A- 5 381 669
- US-A- 5 560 213
- US-A- 5 647 222

## Description

L'invention concerne un procédé et un dispositif de diagnostic d'une boucle de climatisation d'un habitacle de véhicule automobile.

Une telle boucle comprend, de manière classique, un compresseur, un condenseur, une bouteille déshydratante, un détendeur et un évaporateur parcourus, dans cet ordre, par un fluide réfrigérant. L'évaporateur est en outre propre à être traversé par un flux d'air à envoyer dans l'habitacle.

Il est nécessaire de contrôler, notamment à l'occasion de révisions périodiques, l'état du fonctionnement de la boucle de climatisation du véhicule automobile.

Il existe en effet différentes causes susceptibles de provoquer des troubles de fonctionnement de la boucle, et il est donc indispensable de pouvoir les identifier afin d'y remédier.

On connaît notamment un dispositif de diagnostic qui mesure la pression du fluide réfrigérant à la sortie du compresseur (côté haute pression) et la température ambiante dans l'habitacle, dans des conditions reproductibles.

Un dispositif de diagnostic qui place périodiquement le détendeur dans une position de réglage prédéterminée et mesure ensuite la température résultante au refoulement du compresseur est connu US-A-5 381 669.

Toutefois, ces dispositifs connus ne peuvent établir qu'un diagnostic sommaire sans identifier complètement la nature et l'origine du dysfonctionnement constaté.

L'invention a notamment pour but de surmonter cet inconvénient.

Elle propose à cet effet un procédé de diagnostic du type défini en introduction, lequel comprend les opérations suivantes :
a1) détermination d'une valeur de sous-refroidissement à partir de paramètres de la boucle comprenant la mesure d'une valeur de haute pression (HP) à la sortie du condenseur et la mesure d'une valeur de température à l'entrée du détendeur;
a2) détermination d'une valeur de surchauffe à partir de paramètres de la boucle ;
b1) comparaison de la valeur de sous-refroidissement de l'opération a1) avec des valeurs minimale et maximale ;
b2) comparaison de la valeur de surchauffe de l'opération a2) avec des valeurs minimale et maximale ; et
c) traitement des résultats des comparaisons des opérations b1) et b2) pour donner des informations sur l'état de fonctionnement de la boucle.

Ainsi, le diagnostic du fonctionnement de la boucle de climatisation est établi à partir d'une valeur de sous-refroidissement et d'une valeur de surchauffe, lesquelles sont déterminées à partir de paramètres de la boucle. Ces valeurs de sous-refroidissement et de surchauffe sont comparées, à chaque fois, avec des valeurs minimale et maximale pour donner des informations sur l'état de fonctionnement de la boucle.

Dans une forme de réalisation préférée de l'invention, le procédé comprend en outre les opérations suivantes :
a3) détermination d'une valeur de température du flux d'air issu de l'évaporateur, dans des conditions de fonctionnement données ;
b3) comparaison de la valeur de température de l'opération a3) avec des valeurs minimale et maximale ;
et l'opération c) comprend un traitement des résultats de la comparaison de l'opération b3).

Ainsi, le procédé implique également une mesure de la température du flux d'air issu de l'évaporateur, c'est-à-dire du flux d'air réfrigéré admis dans l'habitacle.

Le flux d'air dont la température est mesurée peut provenir directement ou indirectement de l'évaporateur.

En effet, la mesure de température peut être réalisée soit directement à la sortie de l'évaporateur, soit de préférence à la sortie d'un aérateur débouchant dans l'habitacle.

Selon une autre caractéristique de l'invention, l'opération a1) comprend la mesure d'une valeur de haute pression à la sortie du condenseur et la mesure d'une valeur de température à l'entrée du détendeur.

Avantageusement, l'opération a1) comprend le calcul de la valeur de sous-refroidissement par différence entre la valeur de température à l'entrée du détendeur et la valeur théorique de la température de saturation correspondant à la valeur de haute pression mesurée.

Selon encore une autre caractéristique de l'invention, l'opération a2) comprend la mesure d'une valeur de basse pression à la sortie du détendeur et la mesure d'une valeur de température à l'entrée aspiration du compresseur.

Avantageusement, l'opération a2) comprend le calcul de la valeur de surchauffe par différence entre la valeur de température à l'entrée aspiration du compresseur et la valeur théorique de la température de saturation correspondant à la valeur de basse pression mesurée.

Avantageusement, l'opération c) donne l'une des informations suivantes :
- fonctionnement correct de la boucle si la valeur de sous-refroidissement est comprise entre des valeurs minimale et maximale et si la valeur de surchauffe est comprise entre des valeurs minimale et maximale ;
- manque de fluide réfrigérant si la valeur de sous refroidissement est faible ou nulle et/ou si la valeur de surchauffe est élevée ;
- excès de fluide réfrigérant si la valeur de surchauffe est faible ou nulle et/ou si la valeur de sous-refroidissement est élevée ;
- colmatage de la bouteille déshydratante si la valeur de surchauffe est correcte et si la valeur de sous-refroidissement est élevée.

Selon une autre caractéristique de l'invention, les valeurs minimale et maximale de la valeur de sous-refroidissement sont respectivement de 2 et 8°C; et les valeurs minimale et maximale de la valeur de surchauffe sont respectivement de 2 et 8°C.

Dans le cas où le procédé comporte la mesure de la température du flux d'air, l'opération c) donne en outre l'une des informations suivantes sur le niveau de performances de la boucle :
- fonctionnement correct si la température du flux d'air est comprise entre des valeurs minimale et maximale ; et
- dysfonctionnement si la température du flux d'air est en dessous de la valeur minimale ou au-dessus de la valeur maximale.

Avantageusement, les valeurs minimale et maximale de la température du flux d'air sont respectivement de 2 et 10°C.

Le procédé de l'invention peut comprendre en outre une opération de sélection du type de fluide réfrigérant circulant dans la boucle de climatisation.

Selon un autre aspect, l'invention concerne un dispositif de diagnostic applicable à la mise en oeuvre du procédé ci-dessus, lequel comprend :
- des moyens de détermination d'une valeur de sous-refroidissement à partir de paramètres de la boucle ;
- des moyens de détermination d'une valeur de surchauffe à partir de paramètres de la boucle ;
- des moyens de comparaison de la valeur de sous-refroidissement avec des valeurs minimale et maximale ;
- des moyens de comparaison de la valeur de surchauffe (SC) avec des valeurs minimale et maximale ; et
- des moyens de traitement des résultats fournis par les moyens de comparaison pour donner des informations sur l'état de fonctionnement de la boucle.

Dans une forme de réalisation préférée de l'invention, le dispositif comprend en outre des moyens de détermination d'une valeur de température du flux d'air issu de l'évaporateur dans des conditions de fonctionnement données et des moyens de comparaison de la valeur de température avec des valeurs minimale et maximale ; et les moyens de traitement sont propres à traiter en outre les résultats des moyens de comparaison.

Dans une forme de réalisation préférée de l'invention, le dispositif comprend des moyens indicateurs propres à donner l'une des informations suivantes :
- fonctionnement correct de la boucle ;
- manque de fluide réfrigérant ;
- excès de fluide réfrigérant ;
- colmatage de la bouteille déshydratante ;
- dysfonctionnement.

Dans la description qui suit, faite seulement à titre d'exemple, on se réfère aux dessins annexés sur lesquels :
- la figure 1 représente schématiquement un dispositif de diagnostic selon l'invention relié à une boucle de climatisation de véhicule automobile ;
- la figure 2 représente un boîtier d'un dispositif selon une forme de réalisation de l'invention avec des moyens indicateurs ; et
- les figures 3 et 4 représentent deux boîtiers correspondant à deux autres formes de réalisation de l'invention.

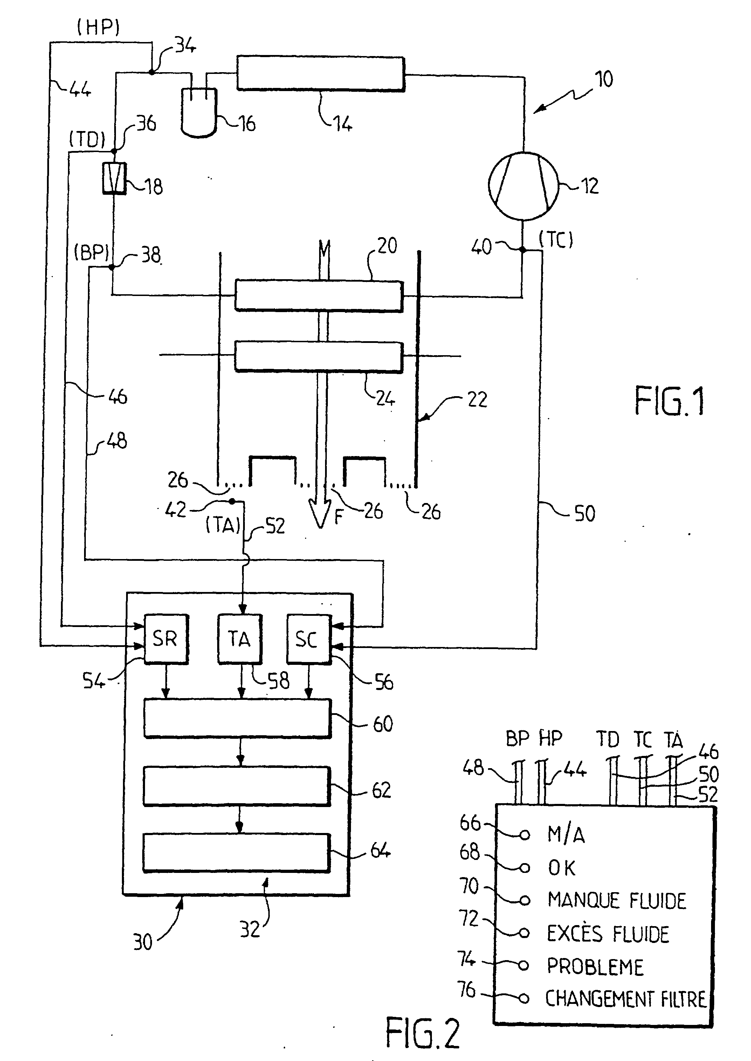

On se réfère tout d'abord à la figure 1 qui montre une boucle de climatisation 10 faisant partie d'une installation de véhicule automobile. La boucle 10 comprend un compresseur 12, un condenseur 14, une bouteille déshydratante 16, un détendeur 18 et un évaporateur 20 parcourus, dans cet ordre, par un fluide réfrigérant.

L'évaporateur 20 est logé dans un boîtier 22 qui contient également un radiateur de chauffage 24 en sorte qu'un flux d'air (flèche F) puisse traverser successivement l'évaporateur 20 et le radiateur de chauffage 24 pour être envoyé dans l'habitacle du véhicule par des aérateurs 26.

Dans une boucle de climatisation de ce type, le fluide réfrigérant gazeux est comprimé par le compresseur 12 et envoyé vers le condenseur 14 où il est transformé en phase liquide. Le fluide réfrigérant liquide passe ensuite à travers la bouteille déshydratante 16 dans laquelle il est filtré et déshydraté. Ensuite, le fluide réfrigérant liquide est détendu dans le détendeur 18 et envoyé vers l'évaporateur 20 dans lequel il se transforme en phase gazeuse en refroidissant le flux d'air F.

Pour assurer le diagnostic du fonctionnement de la boucle 10, l'invention prévoit un dispositif de diagnostic 30 comportant une unité de calcul 32 propre à être raccordée à différents capteurs pour mesurer différents paramètres.

Ces capteurs comprennent un capteur 34 pour mesurer une valeur de haute pression HP à la sortie du condenseur 14, un capteur 36 pour mesurer une valeur de température TD à l'entrée du détendeur 18, un capteur 38 pour mesurer une valeur de basse pression BP en sortie du détendeur 18 et un capteur 40 pour mesurer une valeur de température TC à l'entrée aspiration du compresseur 12.

En outre, un capteur 42 est prévu pour mesurer une valeur de température TA du flux d'air refroidi sortant par les aérateurs 26, la mesure étant effectuée dans des conditions contrôlées.

Les capteurs 34, 36, 38, 40 et 42 précités sont reliés respectivement à l'unité 32 par des lignes 44, 46, 48, 50 et 52.

Les lignes 44 et 46 sont reliées à des moyens 54 pour déterminer une valeur de sous-refroidissement SR. Ces moyens de détermination incluent une table de correspondance comportant une loi de variation de la température de saturation TS du fluide réfrigérant en fonction de la haute pression.

Les moyens 54 calculent la valeur de sous-refroidissement SR sous la forme d'une différence de température telle que : ÄT = TD - TS-HP, où TS-HP correspond à la valeur théorique de la température de saturation pour la valeur de haute pression mesurée HP.

Les lignes 48 et 50 sont reliées à des moyens 56 pour déterminer une valeur de surchauffe SC représentative du fonctionnement de la boucle. Les moyens 56 comprennent une table de correspondance comprenant une loi de variation de la température de saturation en fonction de la basse pression.

Les moyens 56 calculent ainsi la valeur SC comme étant une différence de température ÄT = TC - TS-BP, où TS-BP correspond à la valeur théorique de la température de saturation pour la basse pression (BP) mesurée.

Par ailleurs, la ligne 52 est reliée à des moyens 58 de détermination de la température TA du flux d'air à la sortie des aérateurs.

Les moyens de détermination 54, 56 et 58 précités sont reliés à des moyens de comparaison 60 (comparateur) qui traitent les informations issues des moyens 54, 56 et 58.

Les moyens de comparaison 60 comparent la valeur SR à des valeurs minimale et maximale correspondantes, respectivement SR min et SR max. Ces deux valeurs sont, dans l'exemple, respectivement de 2 et 8°C.

Les moyens de comparaison 60 comparent également la valeur SC à des valeurs minimale et maximale, respectivement SC min et SC max. Dans l'exemple, ces deux valeurs sont respectivement de 2 et 8°C.

En outre, les moyens de comparaison 60 comparent la valeur TA mesurée avec des valeurs minimale et maximale, respectivement TA min et TA max. Dans l'exemple, ces deux valeurs sont respectivement de 2 et 10°C.

Les moyens de comparaison 60 sont reliés à des moyens de traitement 62 qui traitent les informations en fonction d'algorithmes prédéfinis et permettent ensuite d'afficher les résultats sur des moyens indicateurs 64.

Pour cela, le dispositif 30 comporte de préférence un microprocesseur intégrant les algorithmes de calcul de la surchauffe et du sous-refroidissement, ainsi qu'une interprétation des grandeurs thermodynamiques mesurées.

Les moyens de traitement 62 permettent de donner l'une des informations suivantes de diagnostic :
- fonctionnement correct de la boucle si SR est comprise entre SR min et SR max et si SC est comprise entre SC min et SC max ;
- manque de fluide réfrigérant si SR est faible ou nulle (SR ≤ SR min) et/ou si SC est élevée (SC ≥ SC max) :
- excès de fluide réfrigérant si SC est faible ou nulle (SC ≤ SC min) et/ou si SR est élevée (SR ≥ SR max) ;
- colmatage de la bouteille déshydratante si SC est correcte (SC min ≤ SC ≤ SC max) et si SR est élevée (SR ≥ SR max).

En outre, l'unité de traitement 62 peut donner l'une des informations suivantes sur le niveau de performances de la boucle :
- fonctionnement correct si TA est comprise entre TA min et TA max ; et
- dysfonctionnement si TA ≤ TA min ou ≥ TA max.

Le diagnostic s'effectue dans des conditions déterminées, donc reproductibles. Ces conditions sont par exemple les suivantes :
- moteur du véhicule en marche à 1500 tours/minute ;
- vitesse du pulseur en régime maximal (position "maxi") ;
- boîtier d'entrée d'air en position "air extérieur" ;
- climatisation à la température la plus basse (position "froid maxi") ;
- aérateurs fermés sauf celui où est captée la température "TA" du flux d'air ;
- portières et vitres du véhicule fermées.

On se réfère à la figure 2 qui montre un boîtier du dispositif, qui peut être raccordé à l'installation du véhicule par les lignes 44, 46, 48, 50 et 52 décrites précédemment.

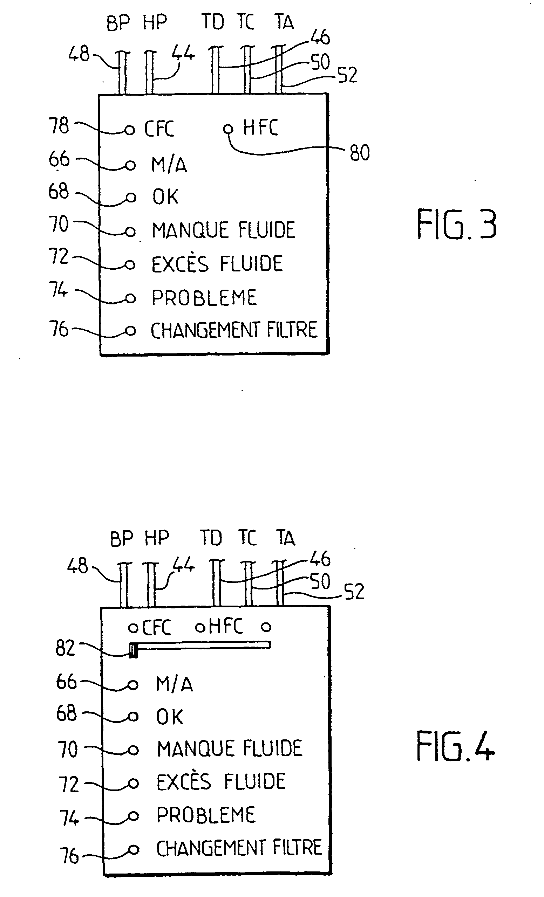

Le boîtier comprend un bouton 66 de marche/arrêt (M/A) et cinq témoins lumineux : témoin 68 "OK" de fonctionnement correct, témoin 70 "manque de fluide", témoin 72 "excès de fluide", témoin 74 "problème" (dysfonctionnement) et témoin 76 "changement de filtre" (colmatage de la bouteille). Ces témoins sont avantageusement des diodes électroluminescentes. Dans la forme de réalisation de la figure 3, le boîtier comprend en outre deux boutons 78 et 80 permettant de sélectionner le type de fluide réfrigérant utilisé dans la boucle de climatisation soumis au diagnostic. Dans cet exemple, il est possible de sélectionner l'un ou l'autre des fluides réfrigérants suivants : "CFC" (chlorofluorocarbone) et "HFC" (hydrofluorocarbone).

Dans la forme de réalisation de la figure 4, le boîtier comprend un curseur 82 permettant de sélectionner le type de fluide réfrigérant parmi trois types : "CFC", "HFC" et un troisième non identifié.

Le dispositif comporte des connexions appropriées pour être raccordé à la boucle. Il permet d'établir un diagnostic complet du fonctionnement de la boucle en vue de remédier à un éventuel dysfonctionnement.

Bien entendu, l'invention n'est pas limitée aux formes de réalisation décrites précédemment à titre d'exemple et s'étend à d'autres variantes.

## Revendications

1. Procédé de diagnostic d'une boucle de climatisation d'un habitacle de véhicule automobile, la dite boucle (10) comprenant un compresseur (12), un condenseur (14), une bouteille déshydrante (16), un détendeur (18) et un évaporateur(20) parcourus dans cet ordre par un fluide réfrigérant, l'évaporateur (20) étant propre à être traversé par un flux d'air (F) à envoyer dans l'habitacle,
**caractérisé en ce qu'**il comprend les opérations suivantes:
a1) détermination d'une valeur de sous-refroidissement (SR) à partir de paramètres de la boucle comprenant la mesure d'une valeur de haute pression (HP) à la sortie du condenseur (14) et la mesure d'une valeur de température (TD) à l'entrée du détendeur (18) ;
a2) détermination d'une valeur de surchauffe (SC) à partir de paramètres de la boucle ;
b1) comparaison de la valeur de sous-refroidissement (SR) de l'opération a1) avec des valeurs minimale et maximale (SR min; SR max) ;
b2) comparaison de 1a valeur de surchauffe (SC) de l'opération a2) avec des valeurs minimale et maximale (SC min ; SC max) ; et
c) traitement des résultats des comparaisons des opérations b1) et b2) pour donner des informations sur l'état de fonctionnement de la boucle.

2. Procédé selon la revendication 1, **caractérisé en ce qu'**il comprend en outre les opérations suivantes:
a3) détermination d'une valeur de température (TA) du flux d'air issu de l'évaporateur (20), dans des conditions de fonctionnement données ;
b3) comparaison de la valeur de température (TA) de l'opération a3) avec des valeurs minimale et maximale (TA min; TA max) ;
et **en ce que** l'opération c) comprend un traitement des résultats de la comparaison de l'opération b3) .

3. Procédé selon la revendication 2, **caractérisé en ce que** l'on mesure la température (TA) du flux d'air directement à la sortie de l'évaporateur (20).

4. Procédé selon la revendication 2, **caractérisé en ce que** l'on mesure la température (TA) du flux d'air directement à la sortie d'un aérateur (26).

5. Procédé selon l'une des revendications 1 à 4, **caractérisé en ce que** l'opération a1) comprend le calcul de la valeur de sous refroidissement (SR) par différence entre la valeur de température (TD) à l'entrée du détendeur et la valeur théorique de la température de saturation (TS-HP) correspondant à la valeur de haute pression (HP) mesurée.

6. Procédé selon l'une des revendications 1 à 5, **caractérisé en ce que** l'opération a2) comprend la mesure d'une valeur de basse pression (BP) à la sortie du détendeur (18) et la mesure d'une valeur de température (TC) à l'entrée aspiration du compresseur (12).

7. Procédé selon la revendication 6, **caractérisé en ce que** l'opération a2) comprend le calcul de la valeur de surchauffe (SC) par différence entre la valeur de température (TC) à l'entrée aspiration du compresseur (12) et la valeur théorique de la température de saturation (TS-BP) correspondant à la valeur de basse pression (BP) mesurée

8. Procédé selon l'une des revendications 1 à 7, **caractérisé en ce que** l'opération c) donne l'une des informations suivantes:
- fonctionnement correct de la boucle si la valeur de sous refroidissement (SR) est comprise entre des valeurs minimale et maximale (SR min ; SR max) et si la valeur de surchauffe (SC) est comprise entre des valeurs minimale et maximale (SC min ; SC max) ;
- manque de fluide réfrigérant si la valeur de sous refroidissement (SR) est faible ou nulle (SR ≤ SR min) et/ou si la valeur de surchauffe (SC) est élevée (SC ≥ SC max) ;
- excès de fluide réfrigérant si la valeur de surchauffe (SC) est faible ou nulle (SC ≤ SC min) et/ou si la valeur de sous-refroidissement (SR) est élevée (SR ≥ SR max) ;
- colmatage de la bouteille déshydrante (16) si, la valeur de surchauffe (SC) est correcte (SC min ≤ SC ≤ SC max) et si la valeur de sous refroidissement (SR) est élevée (SR ≥ SR max).

9. Procédé selon la revendication 8, **caractérisé en ce que** les valeurs minimale et maximale (SR min ; SR max) de la valeur de sous refroidissement (SR) sont respectivement de 2 et 8 °C.

10. Procédé selon la revendication 8, **caractérisé en ce que** les valeurs minimale et maximale (SC min ; SC max) de la valeur de surchauffe (SC) sont respectivement de 2 et 8 °C.

11. Procédé selon l'une des revendications 2 à 10, **caractérisé en ce que** l'opération c) donne en outre l'une des informations suivantes sur le niveau de performances de la boucle:
- fonctionnement correct si la température du flux d'air (TA) est comprise entre des valeurs minimale et maximale (TA min; TA max) ;
- dysfonctionnement si la température du flux d'air (TA) est en dessous de la valeur minimale (TA min) ou au dessus de la valeur maximale (TA max).

12. Procédé selon la revendication 11, caractérisé en ce aue les valeurs minimale et maximale (TA min ; TA max) de la température (TA) du flux d'air sont respectivement de 2 et 10 °C .

13. Procédé selon l'une des revendications 1 à 12, **caractérisé en ce qu'**il comprend en outre une opération de sélection du type de fluide réfrigérant circulant dans la boucle de climatisation.

14. Dispositif de diagnostic applicable à la mise en oeuvre du procédé selon l'une des revendications 1 à 13, **caractérisé en ce qu'**il comprend:
- des moyens (54) de détermination d'une valeur de sous-refroidissement (SR) à partir de paramètres (HP, TD) de la boucle;
- des moyens (56) de détermination d'une valeur de surchauffe (SC) à partir de paramètres (BP, TC) de la boucle;
- des moyens (60) de comparaison de la valeur de sous-refroidissement (SR) avec des valeurs minimale et maximale (SR min ; SR max);
- des moyens (60) de comparaison de la valeur de surchauffe (SC) avec des valeurs minimale et maximale (SC min ; SC max);
- des moyens (62) de traitement des résultats fournis par les moyens de comparaison pour donner des informations sur l'état de fonctionnement de la boucle.

15. Dispositif selon la revendication 14, **caractérisé en ce qu'**il comprend en outre :
- des moyens (58) de détermination d'une valeur de température (TA) du flux d'air (F) issu de l'évaporateur (20) dans des conditions de fonctionnement données ; et
- des moyens (60) de comparaison de la valeur de température (TA) avec des valeurs minimale et maximale (TA min ; TA max);
et **en ce que** les moyens de traitement sont propres à traiter en outre les résultats des moyens de comparaison.

16. Dispositif selon l'une des revendications 14 et 15, **caractérisé en ce qu'**il comprend des moyens indicateurs (64) propres à donner l'une des informations suivantes:
- fonctionnement correct de la boucle;
- manque de fluide réfrigérant;
- excès de fluide réfrigérant;
- colmatage de la bouteille déshydrante;
- dysfonctionnement.

## Patentansprüche

1. Diagnoseverfahren für eine Klimatisierschleife eines Karosseriegehäuses eines Kraftfahrzeugs, wobei die Schleife (10) einen Verdichter (12), einen Kondensator (14), einen Entfeuchter (16), einen Druckminderer (18) und einen Verdampfer (20) umfasst, durch die in dieser Reihenfolge ein Kühlfluid fließt, wobei der Verdampfer (20) von einem Luftstrom (F) durchströmt werden kann, der in das Karosseriegehäuse zu schicken ist,
**dadurch gekennzeichnet, dass** es die folgenden Schritte umfasst:
a1) Bestimmung eines Unterkühlungswertes (SR) auf Basis von Parametern der Schleife, umfassend die Messung eines Hochdruckwertes (HP) am Ausgang des Kondensators (14) und die Messung eines Temperaturwertes (TD) am Eingang des Druckminderers (18);
a2) Bestimmung eines Überhitzungswertes (SC) auf Basis von Parametern der Schleife;
b1) Vergleich des Unterkühlungswertes (SR) aus Schritt a1) mit einem Minimal- und Maximalwert (SR min; SR max);
b2) Vergleich des Überhitzungswertes (SC) aus Schritt a2) mit einem Minimal- und Maximalwert (SC min; SC max); und
c) Bearbeitung der Ergebnisse der Vergleiche aus den Schritten b1) und b2), um Informationen über den Betriebszustand der Schleife zu liefern.

2. Verfahren nach Anspruch 1, **dadurch gekennzeichnet, dass** es ferner die folgenden Schritte umfasst:
a3) Bestimmung eines Temperaturwertes (TA) des aus dem Verdampfer (20) kommenden Luftstroms unter gegebenen Betriebsbedingungen;
b3) Vergleich des Temperaturwertes (TA) aus Schritt a3) mit einem Minimal- und Maximalwert (TA min; TA max);
und dass Schritt c) eine Bearbeitung der Ergebnisse des Vergleichs aus Schritt b3) umfasst.

3. Verfahren nach Anspruch 2, **dadurch gekennzeichnet, dass** die Temperatur (TA) des Luftstroms direkt am Ausgang des Verdampfers (20) gemessen wird.

4. Verfahren nach Anspruch 2, **dadurch gekennzeichnet, dass** die Temperatur (TA) des Luftstroms direkt am Ausgang eines Belüfters (26) gemessen wird.

5. Verfahren nach einem der Ansprüche 1 bis 4, **dadurch gekennzeichnet, dass** der Schritt a1) die Berechnung des Unterkühlungswertes (SR) durch die Differenz zwischen dem Temperaturwert (TD) am Eingang des Druckminderers und dem theoretischen Wert der Sättigungstemperatur (TS-HP) entsprechend dem gemessenen Hochdruckwert (HP) umfasst.

6. Verfahren nach einem der Ansprüche 1 bis 5, **dadurch gekennzeichnet, dass** der Schritt a2) die Messung eines Niederdruckwertes (BP) am Ausgang des Druckminderers (18) und die Messung eines Temperaturwertes (TC) am Ansaugeingang des Verdichters (12) umfasst.

7. Verfahren nach Anspruch 6, **dadurch gekennzeichnet, dass** der Schritt a2) die Berechnung des Überhitzungswertes (SC) durch die Differenz zwischen dem Temperaturwert (TC) am Ansaugeingang des Verdichters (12) und dem theoretischen Wert der Sättigungstemperatur (TS-BP) entsprechend dem gemessenen Niederdruckwert (BP) umfasst.

8. Verfahren nach einem der Ansprüche 1 bis 7, **dadurch gekennzeichnet, dass** der Schritt c) eine der folgenden Informationen liefert:
- ordnungsgemäßer Betrieb der Schleife, wenn der Unterkühlungswert (SR) zwischen einem Minimal- und Maximalwert (SR min; SR max) liegt und wenn der Überhitzungswert (SC) zwischen einem Minimal- und Maximalwert (SC min; SC max) liegt;
- Kühlfluidmangel, wenn der Unterkühlungswert (SR) gering oder gleich Null (SR ≤ SR min) und/oder wenn der Überhitzungswert (SC) hoch ist (SC ≥ SC max);
- Kühlfluidüberschuss, wenn der Überhitzungswert (SC) gering oder gleich Null (SC ≤ SC min) und/oder wenn der Unterkühlungswert (SR) hoch ist (SR ≥ SR max);
- Kolmation des Entfeuchters (16), wenn der Überhitzungswert (SC) richtig ist (SC min ≤ SC ≤ max) und wenn der Unterkühlungswert (SR) hoch ist (SR ≥ SR max).

9. Verfahren nach Anspruch 8, **dadurch gekennzeichnet, dass** der Minimal- und Maximalwert (SR min; SR max) des Unterkühlungswertes (SR) 2 bzw. 8 °C beträgt.

10. Verfahren nach Anspruch 8, **dadurch gekennzeichnet, dass** der Minimal- und Maximalwert (SC min; SC max) des Überhitzungswertes (SC) 2 bzw. 8 °C beträgt.

11. Verfahren nach einem der Ansprüche 2 bis 10, **dadurch gekennzeichnet, dass** der Schritt c) ferner eine der folgenden Informationen über das Leistungsniveau der Schleife liefert:
- ordnungsgemäßer Betrieb, wenn die Temperatur eines Luftstroms (TA) zwischen einem Minimal- und Maximalwert (TA min; TA max) liegt;
- Fehlbetrieb, wenn die Temperatur des Luftstroms (TA) unter dem Minimalwert (TA min) oder über dem Maximalwert (TA max) liegt.

12. Verfahren nach Anspruch 11, **dadurch gekennzeichnet, dass** der Minimal- und Maximalwert (TA min; TA max) der Temperatur (TA) des Luftstroms 2 bzw. 10 °C beträgt.

13. Verfahren nach einem der Ansprüche 1 bis 12, **dadurch gekennzeichnet, dass** es ferner einen Schritt der Auswahl des Typs des Kühlfluids, das in der Klimatisierschleife zirkuliert, umfasst.

14. Diagnosevorrichtung, die für den Einsatz des Verfahrens nach einem der Ansprüche 1 bis 13 anwendbar ist, **dadurch gekennzeichnet, dass** sie umfasst:
- Mittel (54) zur Bestimmung eines Unterkühlungswertes (SR) auf Basis von Parametern (HP, TD) der Schleife;
- Mittel (56) zur Bestimmung eines Überhitzungswertes (SC) auf Basis von Parametern (BP, TC) der Schleife;
- Mittel (60) zum Vergleich des Unterkühlungswertes (SR) mit einem Minimal- und Maximalwert (SR min; SR max);
- Mittel (60) zum Vergleich des Überhitzungswertes (SC) mit einem Minimal- und Maximalwert (SC min; SC max);
- Mittel (62) zur Bearbeitung der von den Vergleichsmitteln gelieferten Ergebnisse, um Informationen über den Betriebszustand der Schleife zu liefern.

15. Vorrichtung nach Anspruch 14, **dadurch gekennzeichnet, dass** sie ferner umfasst:
- Mittel (58) zur Bestimmung eines Temperaturwertes (TA) des aus dem Verdampfer (20) kommenden Luftstroms (F) unter gegebenen Betriebsbedingungen kommt; und
- Mittel (60) zum Vergleich des Temperaturwertes (TA) mit Minimal- und Maximalwert (TA min; TA max);
und dass die Bearbeitungsmittel ferner die Ergebnisse der Vergleichsmittel bearbeiten können.

16. Vorrichtung nach einem der Ansprüche 14 und 15, **dadurch gekennzeichnet, dass** sie Anzeigemittel (64) umfasst, die eine der folgenden Informationen liefern können:
- ordnungsgemäßer Betrieb der Schleife;
- Kühlfluidmangel;
- Kühlfluidüberschuss;
- Kolmation des Entfeuchters;
- Fehlbetrieb.

## Claims

1. Method of diagnosing an air conditioning circuit of a motor vehicle passenger compartment, the said circuit (10) comprising a compressor (12), a condenser (14), a drier bottle (16), a pressure reducing valve (18) and an evaporator (20) through which in this order a refrigerant fluid travels, the evaporator (20) being suitable for having, passing through it, a flow of air (F) for sending into passenger compartment,
**characterized in that** it comprises the following operations:
a1) determination of a supercooling value (SR) based on parameters of the circuit comprising the measurement of a high pressure value (HP) at the outlet of the condenser (14) and the measurement of a temperature value (TD) at the inlet of the pressure reducing valve (18);
a2) determination of a superheating value (SC) based on parameters of the circuit;
b1) comparison of the supercooling value (SR) of the operation a1) with minimum and maximum values (SR min; SR max);
b2) comparison of the superheating value (SC) of the operation a2) with the minimum and maximum values (SC min; SC max); and
c) processing of the results of the comparisons of the operations b1) and b2) to give information on the state of operation of the circuit.

2. Method according to Claim 1, **characterized in that** it also comprises the following operations:
a3) determination of a temperature value (TA) of the flow of air from the evaporator (20), in given operating conditions;
b3) comparison of the temperature value (TA) of the operation a3) with minimum and maximum values (TA min; TA max);
and **in that** the operation c) comprises a processing of the results of the comparison of the operation b3).

3. Method according to Claim 2, **characterized in that** the temperature (TA) of the air flow is measured directly at the outlet of the evaporator (20).

4. Method according to Claim 2, **characterized in that** the temperature (TA) of the air flow is measured directly at the outlet of an air vent (26).

5. Method according to one of Claims 1 to 4, **characterized in that** the operation a1) comprises the calculation of the supercooling value (SR) as the difference between the temperature value (TD) at the inlet of the pressure reducing valve and the theoretical value of the saturation temperature (TS-HP) corresponding to the measured high pressure value (HP).

6. Method according to any one of Claims 1 to 5, **characterized in that** the operation a2) comprises the measurement of a low pressure value (BP) at the outlet of the pressure reducing valve (18) and the measurement of a temperature value (TC) at the inlet of the compressor (12).

7. Method according to Claim 6, **characterized in that** the operation a2) comprises the calculation of the superheating value (SC) as the difference between the temperature value (TC) at the inlet of the compressor (12) and the theoretical value of the saturation temperature (TS-BP) corresponding to the measured low pressure value (BP).

8. Method according to any one of Claims 1 to 7, **characterized in that** the operation c) gives one of the following items of information:
- correct operation of the circuit if the supercooling value (SR) lies between minimum and maximum values (SR min; SR max) and if the superheating value (SC) lies between minimum and maximum values (SC min; SC max);
- lack of refrigerant fluid if the supercooling value (SR) is low or zero (SR ≤ SR min) and/or if the superheating value (SC) is high (SC ≥ SC max);
- excess of refrigerant fluid if the superheating value (SC) is low or zero (SC ≤ SC min) and/or if the supercooling value (SR) is high (SR ≥ SR max);
- blocking of the drier bottle (16) if the superheating value (SC) is correct (SC min ≤ SC ≤ SC max) and if the supercooling value (SR) is high (SR ≥ SR max).

9. Method according to Claim 8 **characterized in that** the minimum and maximum values (SR min; SR max) of the supercooling value (SR) are 2 and 8°C respectively.

10. Method according to Claim 8, **characterized in that** the minimum and maximum values (SC min; SC max) of the superheating value (SC) are 2 and 8°C respectively.

11. Method according to any one of Claims 2 to 10, **characterized in that** the operation c) also gives one of the following items of information on the level of performance of the circuit:
- correct operation if the air flow temperature (TA) lies between minimum and maximum values (TA min; TA max);
- malfunction if the air flow temperature (TA) is below the minimum value (TA min) or above the maximum value (TA max).

12. Method according to Claim 11, **characterized in that** the minimum and maximum values (TA min; TA max) of the air flow temperature (TA) are 2 and 10°C respectively.

13. Method according to any one of Claims 1 to 12, **characterized in that** it also comprises an operation of selecting the type of refrigerant fluid circulating in the air conditioning circuit.

14. Diagnostic device applicable to implementing the method according to one of Claims 1 to 13, **characterized in that** it comprises:
- means (54) of determining a supercooling value (SR) based on parameters (HP, TD) of the circuit;
- means (56) of determining a superheating value (SC) based on parameters (BP, TC) of the circuit;
- means (60) of comparing the supercooling value (SR) with minimum and maximum values (SR min; SR max);
- means (60) of comparing the superheating value (SC) with minimum and maximum values (SC min; SC max);
- means (62) of processing the results supplied by the comparison means to give information on the state of operation of the circuit.

15. Device according to Claim 14, **characterized in that** it also comprises:
- means (58) of determining a temperature value (TA) of the flow of air (F) originating from the evaporator (20) in given operating conditions; and
- means (60) of comparing the temperature value (TA) with minimum and maximum values (TA min; TA max);
and **in that** the processing means are capable also of processing the results of the comparison means.

16. Device according to one of Claims 14 and 15, **characterized in that** it comprises indicator means (64) capable of giving one of the following items of information:
- correct operation of the circuit;
- lack of refrigerant fluid;
- excess of refrigerant fluid;
- blocking of the drier bottle;
- malfunction.
